Europäisches Patentamt

European Patent Office

Office européen des brevets

(11) Veröffentlichungsnummer: **0 446 784 A2**

(12) **EUROPÄISCHE PATENTANMELDUNG**

(21) Anmeldenummer: **91103486.6**

(22) Anmeldetag: **07.03.91**

(51) Int. Cl.⁵: **G11B 11/10**

(30) Priorität: **14.03.90 DE 4008075**

(43) Veröffentlichungstag der Anmeldung:
**18.09.91 Patentblatt 91/38**

(84) Benannte Vertragsstaaten:
**DE FR GB NL**

(71) Anmelder: **BASF Aktiengesellschaft
Carl-Bosch-Strasse 38
W-6700 Ludwigshafen(DE)**

(72) Erfinder: **Harth, Klaus, Dr.
Starenweg 6
W-6719 Altleiningen(DE)**
Erfinder: **Hibst, Hartmut, Dr.
Branichstrasse 23
W-6905 Schriesheim(DE)**

(54) **Magnetooptische Datenplatte.**

(57) Magnetooptische Datenplatte mit mindestens einem optisch transparenten dimensionsstabilen Träger und mindestens einer magnetooptischen Aufzeichnungsschicht aus einer chromhaltigen Lanthanid-übergangsmetall-Legierung, worin sich die Chromkonzentration in horizontaler Richtung ändert, sowie ein Verfahren zur Herstellung der magnetooptischen Datenplatte.

EP 0 446 784 A2

Die vorliegende Erfindung betrifft eine neue magnetooptische Datenplatte mit mindestens einem optisch transparenten dimensionsstabilen Substrat und mindestens einer magnetooptischen Aufzeichnungsschicht aus einer chromhaltigen Lanthanid-übergangsmetall-Legierung sowie ein neues Verfahren zur Herstellung dieser magnetooptischen Datenplatte.

Bekannte magnetooptische Aufzeichnungsschichten sind beispielsweise einkristalline Granatschichten (z.B. Yttrium-Eisen-Granat), polykristalline Schichten aus MnBi oder amorphe Schichten aus Legierungen von Lanthaniden (RE) und übergangsmetallen (TM), im folgenden mit (RE-TM) abgekürzt.

Neuerdings werden die amorphen (RE-TM)-Schichten bevorzugt, da diese Aufzeichnungsschichten großflächig durch Kathodenzerstäubungsmethoden oder durch Aufdampfmethoden hergestellt werden können, und die aufgezeichneten Signale mit einem geringen Rauschen ausgelesen werden können. Viele amorphe (RE-TM)-Legierungen, wie zum Beispiel Tb-Fe, Tb-Fe-Co, Gd-Tb-Fe-Co, Dy-Fe-Co, Nd-Tb-Fe-Co oder Nd-Dy-Fe-Co, besitzen zusätzlich den Vorteil, daß die ferrimagnetische Kopplung der RE- und TM-Atome eine hohe Koerzitivfeldstärke in einer Richtung senkrecht zur Schichtebene ergibt. Die Kompensationstemperatur $T_{comp}$, bei welcher sich die Magnetisierungen der RE- bzw. TM-Atome aufheben und bei welcher besagte Koerzitivfeldstärke sehr groß ist, kann dabei durch geeignete Wahl der Zusammensetzung in weiten Grenzen eingestellt werden. In der Nähe der Kompensationstemperatur sind aufgrund der hohen Koerzitivfeldstärke einmal gespeicherte magnetische Domänen (siehe unten) äußerst stabil, so daß eine hohe Datensicherheit gewährleistet ist.

Diese bekannten magnetooptischen Datenplatten dienen dem Aufzeichnen oder Schreiben von Daten mit Hilfe von Laserstrahlen (beispielsweise impulsmoduliert) , welche auf die magnetooptischen Aufzeichnungsschichten fokussiert sind und senkrecht auf diese auftreffen.

Beim Aufzeichnen oder Schreiben von Daten wird an die magnetooptischen Datenplatten ein externes magnetisches Hilfsfeld angelegt, dessen Feldlinien senkrecht zur Oberfläche der magnetooptischen Aufzeichnungsschichten ausgerichtet sind. Zusätzlich können die magnetooptischen Aufzeichnungsschichten ein entsprechend ausgerichtetes schichtimmanentes (intrinsisches) Magnetfeld aufweisen. Bei einem bekannten alternativen Schreibverfahren wird das äußere Magnetfeld zeitlich moduliert.

Bekanntermaßen werden die aus amorphen ferrimagnetischen (RE-TM)-Legierungen bestehenden, senkrecht zu ihrer Oberfläche magnetisierten, gegebenenfalls mehrschichtigen magnetooptischen Aufzeichnungsschichten beim Einschreiben der Daten durch den Schreiblaserstrahl im Bereich der Auftreffstelle erwärmt. Durch die Erwärmung nimmt die Koerzitivfeldstärke $H_c$ der Legierungen ab. Für Schichten, bei denen $T_{comp}$ höher als Raumtemperatur liegt, erfolgt zwar zunächst ein Anstieg der Koerzitivfeldstärke, oberhalb von $T_{comp}$ nimmt die Koerzitivfeldstärke jedoch ebenfalls ab. Unterschreitet die Koerzitivfeldstärke $H_c$ bei einer von der jeweils verwendeten Legierung abhängigen kritischen Temperatur die Summe der Feldstärken des anliegenden (externen) magnetischen Hilfsfeldes und des intrinsischen Feldes, entsteht in der Auftreffstelle ein Bereich, welcher eine der ursprünglichen Richtung entgegengesetzte Magnetisierungsrichtung aufweist. Ein solcher Bereich wird auch als magnetische Domäne bezeichnet.

Der Durchmesser und die Form der gebildeten Domäne hängen dabei sowohl von der Größe des Laserflecks, der Laserleistung, der Laserpulsdauer und der Stärke des äußeren Magnetfeldes als auch von der Magnetisierung $M_s$ und der Koerzitivfeldstärke $H_c$ der Aufzeichnungsschicht ab. Erstrebenswert sind runde glattrandige Domänen, da diese beim Lesen ein hohes Signal und ein hohes Signal/Rausch-Verhältnis ergeben.

Im Schreibprozeß werden insbesondere dann glattrandige Domänen erhalten, wenn Magnetisierung und Koerzitivfeldstärke der magnetooptischen Speicherschicht eine geeignete Temperaturabhängigkeit aufweisen und bei der Erwärmung durch den Laserstrahl die Curie-Temperatur $T_c$ der Speicherschicht zumindest näherungsweise erreicht wird.

Bei Temperaturen deutlich oberhalb von $T_c$ werden vergrößerte, einander überlappende Domänen mit schlechten Signal/Rausch-Werten erhalten. Dagegen ist bei Temperaturen deutlich unterhalb von $T_c$ die Nukleation von Domänen mit umgekehrter Magnetisierung nur mit sehr hohen und damit für die Anwendung unbrauchbaren externen Magnetfeldern möglich.

Nach Journal de Physique (Band C8, 1988, Seiten 1971 bis 1972) ist beispielsweise für eine Speicherschicht aus GdTbFe dann eine geeignete Temperaturabhängigkeit der Koerzitivfeldstärke $H_c$ gegeben, wenn die Differenz $T_c$-$T_{comp}$ im Bereich von 50 bis 250 K liegt. Bei hohen Magnetisierungswerten der magnetooptischen Speicherschicht sowie einem zu flachen Temperaturgradienten von $H_c$ ist eine ungleichmäßige Domänenwandbewegung begünstigt, bei einem zu steilen Temperaturgradienten liegt dagegen ein vergrößerter Einfluß mikroskopischer Materialinhomogenitäten vor. In beiden Fällen werden ausgefranste Domänen mit schlechten Signal/Rausch-Verhältnissen erhalten.

Bekanntermaßen wird beim Schreiben der Daten der Schreiblaserstrahl in relativer Bewegung über die Oberfläche der magnetooptischen Datenplatten bzw. deren magnetooptische Aufzeichnungsschicht hinweg-

EP 0 446 784 A2

geführt. Im allgemeinen wird hierbei der Laserstrahl von einer verschiebbaren optischen Vorrichtung auf die Aufzeichnungsschicht fokussiert und die betreffende magnetooptische Datenplatte mit konstanter Winkelgeschwindigkeit ("constant angular velocity", CAV) gedreht. Dies hat selbstverständlich zur Folge, daß die Geschwindigkeit der äußeren Bereiche der betreffenden magnetooptischen Datenplatten größer ist als die Geschwindigkeit ihrer inneren Bereiche. Dadurch kommt es beim Einschreiben der Daten mit Hilfe des impulsmodulierten Schreiblaserstrahls in den inneren Bereichen der magnetooptischen Datenplatten, d.h. bei kleinen Radien, zu dem bekannten Phänomen des "pulse crowding", was bedeutet, daß die ummagnetisierten Bereiche oder "spots" bei kleiner werdendem Radius der Datenspuren immer enger zusammenrükken. Die Aufzeichnungsschicht wird weiterhin im Innenbereich der Datenplatte stärker erwärmt als im Außenbereich.

Wenn die Leistung des Schreib-Lasers und die chemische Zusammensetzung der Aufzeichnungsschicht hinsichtlich des Außenbereiches der Datenplatte optimal eingestellt sind, kann sich für Speicherschichten mit räumlich konstanter chemischer Zusammensetzung trotzdem der Innenbereich übermäßig stark erwärmen, woraus schlecht ausgebildete und sich möglicherweise überlappende magnetische Domänen resultieren und damit beim Lesen verringerte Signale und verringerte Signal/Rausch-Verhältnisse erhalten werden. Andererseits wird für derartige Speicherschichten bei einer im Hinblick auf den Innenbereich der Datenplatten erfolgten Optimierung der Laserleistung und der chemischen Zusammensetzung eine unzureichende Schreib- und Löschbarkeit im Außenbereich beobachtet.

Bekanntermaßen können die in die magnetooptischen Datenplatten eingeschriebenen Daten durch gezieltes lokales Erhitzen ihrer magnetooptischen Aufzeichnungsschicht z.B. mittels eines Laserstrahls bei gleichzeitiger Einwirkung eines externen oder eines intrinsischen magnetischen Feldes, dessen Feldlinien senkrecht zur Oberfläche der Aufzeichnungsschicht ausgerichtet sind, bei Bedarf gelöscht werden, wonach man neue Daten einschreiben kann. D.h., der Schreibvorgang ist reversibel.

Für das Lesen der Daten verwendet man üblicherweise das linear polarisierte Licht eines kontinuierlich emittierenden Dauerstrichlasers, dessen Lichtleistung nicht dazu ausreicht, das Material über die kritische Temperatur hinaus zu erwärmen. Dieser Laserstrahl wird entweder von der Aufzeichnungsschicht selbst oder von einer hinter ihr angeordneten Reflexionsschicht reflektiert, wobei es zu einer Wechselwirkung zwischen den magnetischen Momenten in der Aufzeichnungsschicht und dem elektromagnetischen Feld des Laserlichts kommt. Durch diese Wechselwirkung wird die Ebene der Polarisation des reflektierten Laserlichts gegenüber der ursprünglichen Ebene um einen kleinen Winkel gedreht. Geschieht diese Drehung der Ebene der Polarisation bei der Reflexion des Lichts an der Aufzeichnungsschicht selbst, bezeichnet man dies als Kerr-Effekt und den Drehwinkel demnach als Kerr-Drehwinkel; wird dagegen die Ebene beim zweimaligen Durchgang des Lichts durch die Aufzeichnungsschicht gedreht, spricht man vom Faraday-Effekt und vom Faraday-Drehwinkel. Diese Drehung der Ebene der Polarisation des von der magnetooptischen Datenplatte reflektierten Laserlichts kann mit Hilfe geeigneter optischer und elektronischer Geräte gemessen und in Signale umgewandelt werden.

Das "pulse crowding" hat beim Lesen der Daten erhebliche Nachteile zur Folge, weil zwischen den eng gedrängten "spots" nicht mehr länger in der erforderlichen Genauigkeit differenziert werden kann. Die inneren Bereiche der bislang bekannten magnetooptischen Datenplatten haben daher ein schlechteres Signal-Rausch-Verhältnis als die äußeren.

Die vorstehend beschriebenen Nachteile ließen sich zumindest theoretisch dadurch vermindern, indem man die Winkelgeschwindigkeit der magnetooptischen Datenplatten in Abhängigkeit von der Stellung des Schreiblaserstrahls über der betreffenden magnetooptischen Datenplatte ändert. Indes wird für diese Änderung und die hiernach erfolgende Stabilisierung der Winkelgeschwindigkeit soviel Zeit benötigt, daß diese Maßnahme bei magnetooptischen Datenplatten, welche ja speziell im Hinblick auf besonders rasches Einschreiben und Wiedergewinnen von digitalen Daten entwickelt wurden, nicht akzeptabel ist.

Das "pulse crowding" ließe sich auch durch Herabsetzen der Aufzeichnungsfrequenz vermindern. Dies ginge jedoch auf Kosten der Datendichte, was ebenfalls nicht akzeptabel ist.

Die genannten über den Radius der Datenplatte hin auftretenden nachteiligen Ungleichmäßigkeiten können bei den bekannten Datenplatten durch radiale Gradienten in der chemischen Zusammensetzung verstärkt sein.

Beispielsweise ist bekannt, daß die Kathodenzerstäubung von konventionellen (RE-TM)-Targets zu einem radialen Gradienten in der Konzentration der RE- bzw. TM-Atome führt, welcher von dem Target/Substrat-Abstand sowie von der Mikrostruktur des Targets abhängt.

Die übliche Magnetron-Zerstäubung von homogenen (RE-TM)-Legierungstargets ergibt für nicht zu große Substrat/Target-Abstände in der Schicht eine radial nach außen abfallende RE-Konzentration, wobei die Variation der RE-Konzentration mehrere Atom-% (At.-%) betragen kann. Dieser Gradient der RE-Konzentration beeinflußt empfindlich die Lage der Kompensationstemperatur $T_{comp}$ und damit die Tempera-

3

turabhängigkeit von $H_c$ und $M_s$. Als Folge hiervon ändert sich die Domänenform in radialer Richtung der Platte, wodurch zusätzlich radial ungleichmäßige Signal/Rausch-Werte resultieren.

Der radiale Gradient der RE-Konzentration kann durch die Verwendung von Targets mit geeigneten Anteilen an reinen TM- sowie an (RE-TM)-Verbindungsphasen reduziert werden. Der hohe Anteil der weichmagnetischen TM-Phase in solchen Targets führt jedoch zu einer schlechten Materialausnutzung sowie zu einer kurzen Lebensdauer des Targets.

JP-A-63/074143 beschreibt ein magnetooptisches Aufzeichnungsmedium, in dessen (RE-TM)-Aufzeichnungsschicht die Konzentration der übergangsmetalle in radialer Richtung von innen nach außen zunimmt und die Konzentration der Seltenen Erden von innen nach außen abnimmt. Die Aufzeichnungsschichten mit radial inhomogener Konzentrationsverteilung wurden durch Sputtern von homogenen Targets hergestellt, wobei das Target während des Sputterns seitlich versetzt zum Substrat angeordnet war. Für die Aufzeichnungsschicht geeignete (RE-TM)-Legierungen sind NdDyFeCoTi, TbFe, GdTbFe, TbFeCo, GdTbFeCo und SmGdFeCo. Die radial inhomogenen Aufzeichnungsschichten zeichnen sich durch ein radiusunabhängiges Signal/Rausch-Verhältnis aus.

Ein weiterer großer Nachteil der erwähnten (RE-TM)-Legierungen ist ihre mangelnde Korrosionsbeständigkeit. Bei direktem Kontakt der Schichten mit Luft oder Wasserdampf erfolgt eine fortschreitende großflächige Oxidation der magnetooptischen Schicht, die zunächst eine Reduktion des Kerr-Drehwinkels und der Reflektivität und damit eine Abnahme des Signal/Rausch-Verhältnisses bewirkt und schließlich zu vollständig oxidierten, magnetooptisch unbrauchbaren Schichten führt.

Eine Möglichkeit der Verbesserung der Korrosionsbeständigkeit von magnetooptischen Aufzeichnungsträgern auf der Basis von (RE-TM)-Legierungen ist das Aufbringen einer transparenten vorder- und rückseitigen Schutzschicht zur Vermeidung des direkten Luft-Kontaktes der Aufzeichnungsschicht und zur Unterbindung des Eindiffundierens von Sauerstoff- oder Wassermolekülen. Dies ist nur möglich durch sehr dichte, riß- und porenfreie Schichten, zum Beispiel aus $Si_3N_4$ oder AlN. Durch die zusätzliche Deposition der transparenten Schutzschichten vor und nach dem Aufbringen der Aufzeichnungsschicht wird jedoch der Produktionsprozeß einer magnetooptischen Datenplatte deutlich verlängert und verteuert. Außerdem können Defekte in der Schutzschicht, wie zum Beispiel Pinholes oder Risse, zur Korrosion der tieferliegenden magnetooptischen Speicherschicht führen. Eine aufwendige Qualitätskontrolle der deponierten Schutzschichten ist daher notwendig, um ihre Schutzwirkung sicherzustellen. Auch bei Schutzschichten, welche pinhole- und rißfrei sind, besteht am äußeren Rande der Schutzschicht die erhöhte Wahrscheinlichkeit eines direkten Kontakts der zu schützenden (RE-TM)-Schicht mit Sauerstoff oder Feuchtigkeit. An diesen peripheren Stellen können daher ebenfalls leicht Korrosionseffekte auftreten. Von diesen zunächst lokal begrenzten Stellen kann in der Folgezeit eine Unterwanderung der Schutzschicht durch Sauerstoff oder Feuchtigkeit ausgehen, welche zu einer Vergrößerung des Korrosionsbereiches und zu einer totalen Zerstörung der Speicherinformation in diesen Bereichen führt.

Eine alternative Methode zur Verbesserung des Korrosionsverhaltens von amorphen (RE-TM)-Legierungen bietet das Zulegieren von sogenannten Korrosionsinhibitoren, d.h. Elementen, die zu einer zeitlichen Verzögerung der Korrosion der Aufzeichnungsschicht führen. Es ist eine Reihe von (RE-TM)-Legierungen mit homogen zulegierten Korrosionsinhibitoren bekannt. Beispielsweise beschreibt EP-A1-0 229 292 einen magnetooptischen Aufzeichnungsträger, der aus einer (RE-TM)-Legierung mit einem zusätzlichen Element, wie zum Beispiel Ti, Cr, Al, Pt, Zr, V, Ta, Mo, W, Cu, Ru, Rh, Pd, Nb, Ir oder Hf besteht. Die Zugabe der besagten Elemente verzögert die Abnahme der Koerzitivfeldstärke sowie des Kerr-Drehwinkels bei Lagerung der magnetooptischen Schicht in direktem Kontakt mit feuchter Luft.

US 4 693 943 beschreibt einen magnetooptischen Aufzeichnungsträger mit einer amorphen (RE-TM)-Legierung der Komposition $[(GdTb)_{1-y}(FeCo)y]_{1-p}Cr_p$, wobei $0,5 \leq y \leq 0,9$ und $0,001 \leq p \leq 0,3$ ist. Die Zugabe von Cr verbessert dabei deutlich die Korrosionsstabilität des magnetooptischen Aufzeichnungsträgers. Es wurde gefunden, daß die Korrosionsstabilität mit wachsendem Cr-Gehalt monoton ansteigt.

In der besagten US 4 693 943 wurde jedoch keine Veränderung in der magnetischen Charakteristik als Folge des Chromzusatzes festgestellt.

JP-A-62/267 942 beschreibt ein photomagnetisches Aufzeichnungsmedium, das einen Aufzeichnungsfilm enthält, in dem die Konzentration von mindestens einem der Elemente aus der Gruppe Ta, Al, Nb, Zr, Ti, Mo oder Cr in der Wachstumsrichtung des Films zunimmt. Dadurch soll der Korrosionsschutz verbessert sein, ohne daß die magnetischen Charakteristika verschlechtert sind.

JP-A-63/140 076 beschreibt einen vertikalmagnetischen Aufzeichnungsfilm, der durch Laminierung eines 10-30Å dicken Filmes aus mindestens einem Seltenerd-Metal aus der Gruppe Sm, Eu, Gd, Tb, Dy, Ho mit einem 10-30Å dicken Film aus mindestens einem übergangsmetall aus der Gruppe Fe, Co, Ni, Cr und Erhitzen auf 150 bis 300°C gebildet wurde.

Ein wesentlicher Nachteil bei der Verwendung von Korrosionsinhibitoren besteht darin, daß die magnetischen und magnetooptischen Eigenschaften des Aufzeichnungsträgers durch das Zulegieren des Korrosionsinhibitors in der Regel negativ beeinflußt werden. In vielen Fällen wird der Kerr-Drehwinkel verringert und die Temperaturabhängigigkeit der Magnetisierung sowie der Koerzitivfeldstärke ungünstig verändert, mit den bereits erwähnten negativen Auswirkungen auf das Schreib- und Leseverhalten des Aufzeichnungsträgers.

Aufgabe der vorliegenden Erfindung war es daher, eine scheibenförmige magnetooptische Datenplatte gemäß Oberbegriff zu schaffen, welche eine hohe Korrosionsstabilität zeigt, über eine frei einstellbare, radial konstante Schreibempfindlichkeit verfügt und vom Radius unabhängige Carrier-Werte sowie geringe Rausch-Werte besitzt. Als Carrier-Wert wird in bekannter Weise hierbei die Höhe des Maximums im Frequenzspektrum bezeichnet, das bei der Frequenzanalyse des Lesesignals bei der Aufzeichnungsfrequenz erhalten wird.

Überraschenderweise konnte diese Aufgabe über die Änderung der Chromkonzentration in der magnetooptischen Aufzeichnungsschicht in horizontaler Richtung gelöst werden.

Demgemäß handelt es sich bei dem Gegenstand der vorliegenden Erfindung um eine magnetooptische Datenplatte mit mindestens einem optisch transparenten dimensionsstabilen Substrat und mindestens einer magnetooptischen Aufzeichnungsschicht aus einer chromhaltigen (RE-TM)-Legierung, wobei sich die Chromkonzentration in der magnetooptischen Aufzeichnungsschicht in horizontaler Richtung ändert.

Der erfindungsgemäß wesentliche Bestandteil der erfindungsgemäßen magnetooptischen Datenplatte ist die neue magnetooptische Aufzeichnungsschicht. Hierbei kann die erfindungsgemäße magnetooptische Datenplatte auch zwei neue magnetooptische Aufzeichnungsschichten in den nachstehend beschriebenen geeigneten Anordnungen enthalten.

Die erfindungsgemäß zu verwendende neue magnetooptische Aufzeichnungsschicht besteht ebenso wie die bislang bekannten magnetooptischen Aufzeichnungsschichten aus einer chromhaltigen, ferrimagnetischen, amorphen (RE-TM)-Legierung, welche magnetische Übergangsmetalle enthält. Bevorzugte magnetische Übergangsmetalle sind hierbei Eisen und Kobalt.

Beispiele geeigneter Lanthanide für die neue magnetooptische Aufzeichnungsschicht sind Praseodym, Neodym, Samarium, Europium, Gadolinium, Terbium, Dysprosium und Holmium. Besonders geeignet sind hiervon Terbium, Gadolinium und Dysprosium.

Eine gut geeignete Aufzeichnungsschicht der erfindungsgemäßen magnetooptischen Datenplatte hat die mittlere Zusammensetzung

$$R_z Fe_{100-x-y-z} Co_x Cr_y,$$

wobei R mindestens ein Element aus der Reihe der Seltenen Erden La, Ce, Pr, Ho, Nd, Sm, Eu, Gd, Tb oder Dy ist.

Hierbei gilt bevorzugt $10 < z < 40$, $0 < x < 40$ und $0,01 < y < 20$ und für den Fall, daß R = Tb ist, besonders bevorzugt $15 < z < 25$, $4 < x < 25$ und $5 < y < 15$.

Neben Chrom können die erfindungsgemäß zu verwendenden Legierungen weitere korrosionsinhibierende Elemente enthalten.

Beispiele weiterer geeigneter Elemente, welche korrosionsinhibierende Wirkung haben, sind Scandium, Yttrium, Lanthan, Cer, Thorium, Uran, Titan, Zirkonium, Hafnium, Vanadium, Niob, Tantal, Kobalt, Molybdän, Wolfram, Mangan, Rhenium, Ruthenium, Osmium, Rhodium, Iridium, Nickel, Palladium, Platin, Kupfer, Silber, Gold, Zink, Cadmium, Bor, Aluminium, Gallium, Indium, Thallium, Kohlenstoff, Silicium, Germanium, Zinn, Blei, Phosphor, Arsen, Antimon und Wismut.

Diese Elemente sind vorzugsweise so zu wählen, daß eine Erhöhung des magnetooptischen Effektes erzielt wird. Bevorzugte Metalle, die den Kerr-Drehwinkel erhöhen, sind Platin, Gold, Blei oder Wismut. Als besonders bevorzugtes Metall sei Kobalt erwähnt, das den Kerr-Drehwinkel und die Curie-Temperatur erhöht.

Kobalt ist bereits bei der Herstellung einer besonders bevorzugten Ausführungsform der erfindungsgemäßen Datenplatten anwesend, so daß durch die Vorgabe der Kobaltkonzentration eine besonders einfache Einstellung der magnetooptischen Eigenschaften möglich ist.

Mit zunehmendem Chromanteil in den Aufzeichnungsschichten steigt die Korrosionsstabilität, während der Kerr-Drehwinkel und die Curie-Temperatur monoton abfallen.

Bei einer besonders bevorzugten Ausführungsform der erfindungsgemäßen Datenplatten kann folglich durch einen erhöhten Kobaltanteil in den chromhaltigen (RE-TM)-Schichten der Einfluß von Cr auf die Höhe des Auslesesignals und auf die optimale Schreibleistung kompensiert werden.

Um die Verringerung des Auslesesignals durch Chrom möglichst vollständig zu kompensieren, steht die Erhöhung des mittleren Kobaltgehaltes dx in einem Verhältnis zum mittleren Chromgehalt y, für das vorteilhaft folgende Beziehung gilt:

0,6 < dx/y < 1,4.

Hierbei ist unter mittlerem Chrom- bzw. Kobaltgehalt der Gehalt (in At.-%) zu verstehen, den die magnetooptische Aufzeichnungsschicht bei einer homogenen Konzentrationsverteilung von Chrom bzw. Kobalt hätte.

Darüber hinaus können noch Spuren von Stickstoff, Sauerstoff, Schwefel, Selen, Tellur, Fluor, Chlor, Brom und/oder Iod in der neuen magnetooptischen Aufzeichnungsschicht enthalten sein.

Beispiele gut geeigneter Elementkombinationen, wie sie in den erfindungsgemäß. zu verwendenden Legierungen bzw. in der neuen magnetooptischen Aufzeichnungsschicht vorliegen, sowie die Atomverhältnisse, in denen die Elemente vorteilhafterweise miteinander kombiniert werden, sind an und für sich bekannt und gehen beispielsweise aus der EP-A-184 034, der US-A-4 693 943, der DE-C-34 40 391, der EP-A-0 302 393 oder der EP-A-0 229 292 hervor.

Beispiele besonders gut geeigneter Elementkombinationen sind SmCoCr, GdCoCr, GdFeCr, TbFeCr, TbCoCr, GdTbCoCr, NdFeCoCr, NdDyFeCoCr, SmDyFeCoCr, SmDyFeNiCoCr, TbFeCoCr, GdTbFeCr, GdFeCoCr, DyFeCoCr, GdTbFeCoCr oder GdTbFeNiCoCr, von denen GdTbCoCr und GdTbFeCoCr bevorzugt und TbFeCoCr besonders bevorzugt werden.

Das erfindungswesentliche Merkmal, durch welches sich die neue magnetooptische Aufzeichnungsschicht der erfindungsgemäßen Datenplatten grundlegend von den bisher bekannten magnetooptischen Aufzeichnungsschichten unterscheidet, ist der horizontale Gradient der Chromkonzentration in der neuen magnetooptischen Aufzeichnungsschicht. D.h. mit anderen Worten, daß sich in der neuen magnetooptischen Aufzeichnungsschicht im Gegensatz zu den bislang bekannten die Konzentration des Chroms in horizontaler Richtung ändert. Hierbei kann sich die Chromkonzentration in einzelnen Sektoren oder Bereichen der neuen magnetooptischen Aufzeichnungsschicht in unterschiedlicher Weise ändern, indes ist es erfindungsgemäß bevorzugt, wenn sich die Chromkonzentration über die gesamte Fläche der neuen magnetooptischen Aufzeichnungsschicht hinweg einheitlich ändert. Erfindungsgemäß ist es von Vorteil, wenn sich die Chromkonzentration in radialer Richtung ändert. Hierbei ist es von besonderem Vorteil, wenn die Chromkonzentration von dem inneren Rand der neuen magnetooptischen Aufzeichnungsschicht zu deren äußeren Rand hin zunimmt.

Die Veränderung der Chromkonzentration über den Radius der magnetooptischen Aufzeichnungsschicht hinweg kann vorzugsweise durch eine mathematische Funktion beschrieben werden, welche innerhalb der Radiuslänge stetig ist.

In Systemen mit dielektrischen Schutzschichten sollte die Korrosionsstabilität vor allen Dingen dort hoch sein, wo die oberflächliche Schutzschicht zu Pinholes oder Rissen neigt oder Begrenzungen besitzt. Korrosionsexperimente zeigen, daß insbesondere die Außenränder der Schutzschicht ein Angriffspunkt für lokale Korrosion sind. Zur Erzielung eines hohen Korrosionsschutzes sollte daher eine hohe Konzentration von Cr am äußeren Rande der Schicht erreicht werden. Zum Innern der Platte hingegen ist ein Abfall der Cr-Konzentration für die Erhöhung des Kerr-Drehwinkels von Vorteil.

In einer besonders vorteilhaften Ausführungsform der Erfindung steigt der Cr-Gehalt innerhalb der physikalischen Fehlergrenzen angenähert oder exakt linear mit zunehmendem Radius an und erreicht am Außenrand der Platte den für einen guten Korrosionsschutz notwendigen Maximalwert. Ein radial nach außen ansteigender Cr-Gehalt in der erfindungsgemäßen (RE-TM)-Schicht hatte zudem überraschenderweise einen sehr günstigen Einfluß auf den radialen Verlauf der Schreibempfindlichkeit.

Bei einer magnetooptischen Datenplatte mit radial homogener chemischer Zusammensetzung der Speicherschicht führt eine konstante Winkelgeschwindigkeit der Datenplatte bei konstanten Laserpulsbedingungen zu einer Abnahme der pro Flächeneinheit deponierten Wärmemenge mit zunehmendem Radius. Aufgrund der über den Radius konstanten Curie-Temperatur der Datenplatte muß dabei die optimale Schreibleistung des Mediums nach außen hin zunehmen, um starke Variationen des Aufzeichnungsverhaltens längs des Radius zu vermeiden. Die erfindungsgemäße Verteilung des Chromgehaltes führt zu einer näherungsweise linearen Abnahme der Curie-Temperatur $T_c$ mit zunehmendem Radius, welche der reduzierten Wärmezufuhr entgegenwirkt.

Der radiale Empfindlichkeitsverlauf der erfindungsgemäßen Schichten kann daher so eingestellt werden, daß die gesamte Platte unabhängig vom Radius mit der gleichen optimalen Schreibleistung beschrieben werden kann. Der optimale Gradient des Cr-Gehaltes hängt dabei im allgemeinen ab von dem Gesamtaufbau der magnetooptischen Datenplatte, insbesondere von den Wärmeleiteigenschaften des deponierten Schichtsystems. So zeigen beispielsweise magnetooptische Datenplatten mit einem Dreischichtenaufbau Dielektrikum/Speicherschicht/Dielektrikum einen stärkeren Gradienten der optimalen Laserleistung als MO-

6

Medien mit einem Vierschichtenaufbau Dielektrikum/ Speicherschicht/Dielektrikum/Metall, da in den letztgenannten Datenplatten die zusätzliche Metallschicht für eine schnelle Wärmeabfuhr sorgt. Stärkere Gradienten in der optimalen Schreibleistung verlangen stärkere Gradienten des Cr-Gehaltes in radialer Richtung.

Der absolute Wert der Schreibleistung kann dabei in einer besonders bevorzugten Ausführungsform leicht durch Variation des Co-Gehaltes den Laufwerksbedingungen (z.B. Umdrehungszahl, Laserleistung, Laserpulsdauer etc.) angepaßt werden.

Die erfindungsgemäße horizontale Änderung der Chromkonzentration hat eine Änderung der Kompensationstemperatur $T_{comp}$ der ferrimagnetischen Legierung zur Folge, aus welcher die magnetooptische Aufzeichnungsschicht aufgebaut ist. Bekanntermaßen ist die Kompensationstemperatur $T_{comp}$ die Temperatur, bei welcher die Gesamtmagnetisierung $M_s$ der ferrimagnetischen Legierung bzw. der magnetooptischen Aufzeichnungsschicht nach außen hin gleich 0 wird.

Mit zunehmendem Cr-Gehalt wächst die Kompensationstemperatur $T_{comp}$. Der durch den RE-Gradienten, der typischerweise beim Sputtern von homogenen Legierungstargets entsteht, bedingten Abnahme der Kompensationstemperatur $T_{comp}$ vom Innenrand zum Außenrand und der nachteiligen radialen Variation von $H_c$ und $M_s$, sowie von deren Temperaturabhängigkeit, wird dadurch effektiv entgegengewirkt. Hieraus resultiert ein gleichmäßiger radialer Verlauf von $H_c$ sowie von $M_s$ und damit ein homogenes Domänenschaltverhalten. Homogenes Domänenschaltverhalten bedeutet hierbei, daß sich unabhängig vom Radius glattrandige Domänen ausbilden. Bei einer bevorzugten Ausführungsform der Erfindung ist $T_{comp}$ über die gesamte Radiuslänge der magnetooptischen Aufzeichnungsschicht hinweg konstant.

Im Ergebnis wird beim Lesen ein gleichmäßiges, hohes Signal/Rausch-Verhältnis erzielt.

Eventuell verbleibende Variationen in $T_{comp}$ können durch eine Anpassung des Phasenanteils der intermetallischen Legierungen im Target eliminiert werden. Im Gegensatz zu Targets nach dem Stand der Technik sind hierbei jedoch geringere Anteile der weichmagnetischen TM-Phase notwendig, weshalb die Targets im Magnetron-Mode mit hoher Rate und hoher Materialausnutzung versputtert werden können.

Der absolute Wert der Kompensationstemperatur kann durch Zugabe weiterer Lanthanide und/oder Übergangsmetalle und/oder die Änderung des Lanthanid/ übergangsmetall-Verhältnisses in an sich bekannter Weise eingestellt werden.

Die neue magnetooptische Aufzeichnungsschicht der erfindungsgemäßen Datenplatten weist eine Dicke im üblichen und bekannten Bereich auf. Im allgemeinen liegt dieser Dickenbereich bei 10 bis 500 nm.

Die Herstellung der neuen magnetooptischen Aufzeichnungsschicht erfolgt im Rahmen der Herstellung der erfindungsgemäßen magnetooptischen Datenplatte.

Die erfindungsgemäße magnetooptische Datenplatte enthält neben der neuen Aufzeichnungsschicht das optisch transparente dimensionsstabile Substrat als weiteren wesentlichen Bestandteil.

Beispiele vorteilhafter dimensionsstabiler Substrate sind die üblichen und bekannten, scheibenförmigen, optisch klaren, dimensionsstabilen Substrate. Im allgemeinen bestehen diese aus optisch transparenten keramischen Materialien oder aus Kunststoffen. Üblicherweise haben sie einen Durchmesser, welcher im Bereich von 50 bis 200 mm, vorteilhafterweise 80 bis 150 mm und insbesondere 90 oder 130 mm liegt. Im allgemeinen sind sie 0,5 bis 1,5 mm, vorzugsweise 0,8 bis 1,3 mm dick.

Ein Beispiel eines geeigneten optisch transparenten dimensionsstabilen keramischen Materials ist Glas. Beispiele geeigneter optisch klarer dimensionsstabiler Kunststoffe sind Polycarbonat, Polymethylmethacrylat, Polymethylpenten, Celluloseacetobutyrat, Gemische aus Polyvinylidenchlorid und Polymethylmethacrylat und Gemische aus Polystyrol und Poly(2,6-dimethyl-phen-1,4-ylen-ether). Hiervon sind die dimensionsstabilen Substrate aus Kunststoffen besonders vorteilhaft.

Diejenige Oberfläche des dimensionsstabilen Substrats, welche der neuen magnetooptischen Aufzeichnungsschicht zugewandt ist, kann Strukturen aufweisen.

Die Strukturen in der Oberfläche des dimensionsstabilen Substrats liegen im Mikrometer- und/oder Submikrometer-Bereich. Sie dienen der exakten Führung des Leselaserstrahls und gewährleisten ein rasches und genaues Ansprechen der Spurlagenservo- und Autofokussiereinrichtungen in den laseroptischen Schreib- und Leseköpfen der Plattenlaufwerke, d.h. sie ermöglichen oder verbessern das "tracking". Außerdem können diese Strukturen selbst Daten sein, wie dies beispielsweise bei den bekannten Audio- oder Video-Compact-Disks der Fall ist, oder sie können der Codierung der eingeschriebenen Daten dienen. Die Strukturen bestehen aus erhabenen Teilen und/oder aus Vertiefungen. Diese liegen in der Form von durchgehenden konzentrischen oder spiralförmigen Spurrillen oder als isolierte Hügel und/oder Löcher vor. Außerdem kann die Struktur eine mehr oder weniger glatte Wellenform haben. Den Spurrillen wird hierbei der Vorzug gegeben. Diese weisen in ihrer Querrichtung eine rechteckige, sägezahnartige, eine V-förmige oder eine trapezartige Kontur auf. Ihre Vertiefungen werden im allgemeinen als "grooves" und ihre erhabenen Teile als "land" bezeichnet. Von besonderem Vorteil sind Spurrillen mit 50 bis 200 nm tiefen und 0,4 bis 1,0 $\mu$m breiten "grooves", zwischen denen jeweils ein 1 bis 3 $\mu$m breites "land" liegt.

Die Herstellung des besonders bevorzugt verwendeten dimensionsstabilen Substrats erfolgt in an sich bekannter Weise durch die formgebende Bearbeitung des das Substrat aufbauenden Kunststoffs oder Kunststoffgemischs mit Hilfe der Spritzgußtechnik gegebenenfalls unter Reinraumbedingungen, so wie dies beispielsweise in der DE-A-37 27 093 beschrieben wird.

Die erfindungsgemäße magnetooptische Datenplatte kann neben dem dimensionsstabilen Substrat und der neuen magnetooptischen Aufzeichnungsschicht zumindest noch eine weitere Schicht enthalten.

Die Anordnung der verschiedenen Schichten hängt davon ab, ob die magnetooptische Speicherschicht beim Beschreiben oder Lesen von der Substrat- oder Luftseite her mit Laserlicht bestrahlt wird. Die Bestrahlung von der Substratseite ist bevorzugt.

Im letzten Fall kann sich beispielsweise zwischen dem dimensionsstabilen Substrat und der neuen magnetooptischen Aufzeichnungsschicht eine übliche und bekannte Antireflexionsschicht aus einem optisch transparenten dielektrischen Material mit hohem Brechungsindex befinden. Der Brechungsindex ist größer als der des Substrats, aber kleiner als der der Aufzeichnungsschicht. Dieses Material enthält üblicherweise Oxide und/oder Nitride oder es besteht aus diesen Verbindungen.

Außerdem kann auf der dem Substrat abgewandten Seite der neuen magnetooptischen Aufzeichnungsschicht eine weitere, Oxide und/oder Nitride enthaltende oder aus Oxiden und/oder Nitriden bestehende optisch transparente dielektrische Schicht vorhanden sein.

Des weiteren kann sich auf der dem dimensionsstabilen Substrat abgewandten Seite der neuen magnetooptischen Aufzeichnungsschicht, direkt oder auf einer hierauf angeordneten transparenten Schicht aus Oxiden und/oder Nitriden, eine übliche und bekannte Reflexionsschicht befinden, welche üblicherweise aus Metallen besteht.

Überdies kann die erfindungsgemäße magnetooptische Datenplatte auf der Seite der Reflexionsschicht, welche der neuen magnetooptischen Aufzeichnungsschicht abgewandt ist, und/oder auf mindestens einer Seite der neuen magnetooptischen Aufzeichnungsschicht eine übliche und bekannte dielektrische Schutz- oder Antikorrosionsschicht aufweisen, die Carbide, Oxide und/oder Nitride enthält oder aus Carbiden, Oxiden und/oder Nitriden besteht.

Hierbei können die zusätzlichen Schichten (Reflexionsschicht bzw. Schutz/Antikorrosionsschicht) auch aus mehreren separaten Lagen aufgebaut sein. Diese Schichten können röntgenamorph oder polykristallin sein.

Die Dicke dieser zusätzlichen Schichten ist allgemein bekannt und kann beispielsweise dem eingangs zitierten Stand der Technik entnommen werden.

Es ist allerdings auch möglich, daß die Bestrahlung der magnetooptischen Aufzeichnungsschicht von der Luftseite her, direkt oder durch eventuell vorhandene transparente Antireflexions- und/oder Schutzschichten, erfolgt. In diesem Fall ist die Antireflexionsschicht auf der dem Substrat abgewandten Seite der magnetooptischen Aufzeichnungsschicht angeordnet. Entsprechend befindet sich die Reflexionsschicht zwischen dem Substrat und der magnetooptischen Aufzeichnungsschicht.

Weitere Beispiele geeigneter Möglichkeiten zur Anordnung der verschiedenen Schichten in der erfindungsgemäßen magnetooptischen Datenplatte gehen aus der US-A-4 710 418 hervor.

Für spezielle Anwendungszwecke kann die erfindungsgemäße magnetooptische Datenplatte auch noch mindestens eine weitere übliche und bekannte magnetisierbare Schicht aufweisen. Bei dieser magnetisierbaren Schicht kann es sich um eine hartmagnetische oder weichmagnetische Schicht oder um eine übliche und bekannte magnetooptische Aufzeichnungsschicht handeln. Des weiteren kommt hierfür auch eine weitere neue magnetooptische Aufzeichnungsschicht in Betracht.

Die Herstellung der Reflexionsschicht, der Antikorrosionsschicht und die der weiteren Schichten erfolgt im Rahmen der Herstellung der erfindungsgemäßen magnetooptischen Datenplatte, wobei sich die Reihenfolge der einzelnen Herstellungs- oder Verfahrensschritte aus dem jeweiligen Aufbau der erfindungsgemäßen magnetooptischen Datenplatte ergibt.

Zwei der vorstehend beschriebenen erfindungsgemäßen magnetooptischen Datenplatten können des weiteren "sandwich"-artig so miteinander verbunden werden, daß ihre Aufzeichnungsschichten einander zugekehrt sind und ein gewisser Abstand zwischen ihnen herrscht. Hierfür werden die üblichen und bekannten Techniken zum Verbinden zweier magnetooptischer Datenplatten angewandt, wie sie beispielsweise aus der US-A-4 751 124 oder der DE-A-37 18 302 bekannt sind.

Die Herstellung der erfindungsgemäßen magnetooptischen Datenplatte geht aus von dem vorstehend beschriebenen dimensionsstabilen Träger, auf dessen eine Oberfläche die neue magnetooptische Aufzeichnungsschicht in der gewünschten Dicke und mit der jeweils erfindungsgemäß erforderlichen Zusammensetzung sowie gegebenenfalls die weiteren dielektrischen und/oder Metallschichten sowie die weiteren magnetisierbaren Schichten in der gewünschten Reihenfolge, Anzahl und Dicke mit dem jeweils gewünschten Aufbau aus der Gasphase aufgebracht werden, wonach man in der neuen magnetooptischen Aufzeichnungsschicht eine definierte, senkrecht zu ihrer Oberfläche orientierte Magnetisierung in üblicher und bekannter Weise induziert.

Hierbei erfolgt das Aufbringen der neuen magnetooptischen Aufzeichnungsschicht und das der gegebenenfalls vorhandenen weiteren Schichten mit Hilfe der üblichen und bekannten Techniken der Herstellung dünner Schichten durch Aufdampfen, reaktives Aufdampfen, Ionenplattieren ("ion-plating"), "ion cluster beam deposition" (ICB), Kathodenzerstäubung, reaktive Kathodenzerstäubung, Magnetronkathodenzerstäubung oder reaktive Magnetronkathodenzerstäubung, wobei man die Kathodenzerstäubungsmethoden, welche allgemein auch als "sputtering" bezeichnet werden, bevorzugt anwendet.

Bei der Kathodenzerstäubung ("sputtering") werden die entsprechenden Metalle, Carbide, Oxide, Nitride und/oder die gegebenenfalls verwendeten sonstigen Verbindungen in der gewünschten Reihenfolge und Menge von einer auf die Kathode aufgelegten Materialquelle ("sputtering target") aus im Vakuum in einer Prozeßgasatmosphäre zerstäubt und auf dem dimensionsstabilen Träger oder auf einer bereits hierauf vorhandenen Schicht abgeschieden. üblicherweise enthält hierbei das Prozeßgas ein Edelgas wie Argon.

Bei der reaktiven Kathodenzerstäubung ("reactive sputtering") werden dem Prozeßgas weitere reaktive Gase wie Wasserstoff, Kohlenwasserstoffe, Sauerstoff, Stickstoff u.a. in der gewünschten Menge zu einem geeigneten Zeitpunkt zugemischt. Hierdurch kann man durch Zerstäubung eines Metalls beispielsweise in der Gegenwart von Kohlenwasserstoffen, Sauerstoff und/oder Stickstoff im Prozeßgas direkt die betreffenden Metalloxid-, -nitrid-, -carbid-, -carbidoxid-, -carbidnitrid-, -oxidnitrid- oder -carbidoxidnitrid-Schichten abscheiden. Dabei können die Dicke, die Struktur und die Zusammensetzung der betreffenden Schichten über die Zerstäubungsrate, die Abscheiderate, den Prozeßgasdruck und die Prozeßgaszusammensetzung auf an sich bekannte Weise eingestellt werden.

Bei der (reaktiven) Magnetronkathodenzerstäubung ["(reactive) magnetron sputtering"] befindet sich das "target" bekanntermaßen in einem Magnetfeld.

Beispiele geeigneter "sputtering"-Verfahren gehen aus der US-A-4 670 353, der US-A-4 670 316 oder der DE-A-37 35 385 hervor.

Nach einer Variante des erfindungsgemäßen Verfahrens erfolgt die Herstellung der neuen magnetooptischen Aufzeichnungsschicht mittels der Kathoden- oder Magnetronkathodenzerstäubung einer chromhaltigen (RE-TM)-Legierung geeigneter äußerer Form als Materialquelle ("sputtering target") im Vakuum in einer Prozeßgasatmosphäre und durch Abscheiden der chromhaltigen Lanthanid-übergangsmetall-Legierung aus der Gasphase auf der Oberfläche des dimensionsstabilen Trägers oder einer hierauf bereits befindlichen Schicht, wobei man erfindungsgemäß eine scheiben-oder ringförmige Materialquelle inhomogener Zusammensetzung verwendet.

Hierbei weist die Bezeichnung "inhomogene Zusammensetzung" darauf hin, daß sich in der Materialquelle die Chromkonzentration in Abhängigkeit vom Radius oder in horizontaler Richtung ändert. Diese Änderung der Chromkonzentration kann kontinuierlich oder diskontinuierlich erfolgen.

Hierbei kann die Änderung der Chromkonzentration über alle Radien der Materialquelle hinweg einheitlich oder uneinheitlich sein. Erfindungsgemäß ist es von Vorteil, wenn sich die Chromkonzentration über alle Radien der Materialquelle hinweg einheitlich ändert. Erfindungsgemäß ist es von besonderem Vorteil, wenn sie sich in radialer Richtung einheitlich ändert.

Des weiteren kann sich die Chromkonzentration in der Materialquelle in der Weise ändern, daß sie sich innerhalb der Fehlergrenzen angenähert oder exakt durch eine mathematische Funktion beschreiben läßt, die innerhalb der Radiuslänge stetig ist.

Hierbei ist es von Vorteil, wenn die Änderung der Chromkonzentration innerhalb der Materialquelle linear ist, d.h., daß sie innerhalb der Fehlergrenzen angenähert oder exakt durch eine Gerade beschrieben werden kann.

Für die Herstellung der neuen magnetooptischen Aufzeichnungsschicht wird ganz besonders bevorzugt eine scheiben- oder ringförmige Materialquelle verwendet, in welcher die Chromkonzentration vom inneren Rand aus zum äußeren Rand der Materialquelle hin zunimmt. Hierbei ist es von ganz besonderem Vorteil, wenn die Chromkonzentration gemäß einer innerhalb der Radiuslänge stetigen mathematischen Funktion zunimmt.

Grundsätzlich kann die gezielte Änderung der Chromkonzentration in der Materialquelle dadurch bewerkstelligt werden, daß die Materialquelle aus konzentrischen Ringen aufgebaut ist, welche sich in geeigneter Weise stofflich voneinander unterscheiden. So können beispielsweise die äußeren konzentrischen Ringe eine höhere oder niedrigere Chromkonzentration als die inneren konzentrischen Ringe der Materialquelle haben. Außerdem kann die Hauptmenge der Materialquelle aus einer (RE-TM)-Legierung bestehen, in welche chromreiche Bezirke vorzugsweise ringförmig eingelagert sind, wobei diese Einlagerung vorteilhafterweise an der Oberfläche der Materialquelle erfolgt. Hierbei kann die Änderung der Chromkonzentration über die Variation der Anzahl, der Fläche und/oder der Zusammensetzung der chromreichen Bezirke in geeigneter Weise gezielt eingestellt werden.

Alternativ kann die gezielte Änderung der Chromkonzentration in der Materialquelle dadurch bewerkstelligt werden, daß eine Materialquelle verwendet wird, bei der auf der Oberfläche der radial homogenen oder inhomogenen (RE-TM)-Legierung chromreiche Körper geeigneter äußerer Form angeordnet sind. Hierbei kann die Änderung der Chromkonzentration über die Variation der Anzahl, der äußeren Form und Größe, sowie der Oberflächenkonzentration der chromreichen Körper in geeigneter Weise eingestellt werden. Unter Oberflächenkonzentration wird hierbei die auf die Flächeneinheit bezogene Gesamtmasse der chromreichen Körper bezeichnet. In einer bevorzugten Ausführungsform bestehen die chromreichen Körper aus dünnen Scheiben (Durchmesser: 3 bis 15 mm; Dicke 0,1 bis 3 mm) mit einem Chromgehalt von mehr als 50 At.-%. Besonders bevorzugt sind die chromhaltigen Körper auf der Oberfläche der radial homogenen oder inhomogenen (RE-TM)-Legierung mit vom inneren zum äußeren Rand hin zunehmender Oberflächenkonzentration angeordnet.

Welche der vorstehend beschriebenen Materialquellen ("sputtering targets") man für die Herstellung der in der erfindungsgemäßen magnetooptischen Datenplatte jeweils vorliegenden neuen magnetooptischen Aufzeichnungsschicht verwendet, richtet sich in erster Linie nach der gewünschten Zusammensetzung der betreffenden neuen magnetooptischen Aufzeichnungsschicht. Die Auswahl selbst kann unter Berücksichtigung der Tatsache, daß der in der Materialquelle vorhandene Gradient der Chromkonzentration auf die herzustellende neue magnetooptische Aufzeichnungsschicht übertragen wird, vom Fachmann in einfacher Weise vorgenommen werden.

Die erfindungsgemäßen magnetooptischen Datenplatten können in der üblichen Weise von der Seite des optisch transparenten dimensionsstabilen Substrats her mit Hilfe eines impulsmodulierten, auf die neuen magnetooptischen Auf-zeichnungsschichten fokussierten und senkrecht auf diese auftreffenden Schreiblaserstrahls einer Wellenlänge $\lambda$ von kleiner als 1000 nm mit Daten in Form ummagnetisierter "spots" beschrieben werden. Hiernach können die Daten mit Hilfe eines auf die beschriebenen neuen magnetooptischen Aufzeichnungsschichten fokussierten und senkrecht auf sie auftreffenden Dauerstrichlaserstrahls gelesen werden, wobei man das von den Aufzeichnungsschichten selbst oder das von Reflexionsschichten reflektierte Licht erfaßt, analysiert und in Signale umwandelt. Im Falle der erfindungsgemäßen magnetooptischen Datenplatten können hierfür die üblichen und bekannten laseroptischen Plattenlaufwerke mit laseroptischen Köpfen, welche Halbleiterlaser enthalten, verwendet werden.

Die erfindungsgemäßen· magnetooptischen Datenplatten weisen gegenüber dem Stand der Technik besondere Vorteile auf. So können sie - bei gleicher Laserleistung - bei höheren Plattendrehzahlen beschrieben werden als bekannte magnetooptische Datenplatten. Auch ihre Bitdichte kann gegenüber dem Stand der Technik deutlich erhöht werden. Beim Lesen liefern sie unverzerrte Signale und weisen ein sehr hohes Signal-Rausch-Verhältnis auf. Hierbei ist hervorzuheben, daß sowohl ihre Aufzeichnungsempfindlichkeit als auch ihr Signal-Rausch-Verhältnis nicht mehr länger signifikant vom Radius abhängig sind, sondern über die gesamte Oberfläche der neuen magnetooptischen Aufzeichnungsschicht hinweg einheitlich hoch sind. Hinzu kommt noch, daß die neuen magnetooptischen Aufzeichnungsschichten in hervorragender und dennoch einfacher Weise dem Eigenschaftsprofil der übrigen in den erfindungsgemäßen magnetooptischen Datenplatten gegebenenfalls vorhandenen Schichten angepaßt werden können, wodurch sich bislang unbekannte und/oder bislang als nicht realisierbar erachtete Möglichkeiten der Optimierung magnetooptischer Datenplatten ergeben.

Außerdem zeichnen sich die erfindungsgemäßen magnetooptischen Datenplatten beim Schreiben durch eine frei einstellbare, radial konstante Schreib- und Löschempfindlichkeit aus.

Die erfindungsgemäßen magnetooptischen Datenplatten weisen eine hohe Korrosionsstabilität auf. Gegenüber den Platten nach Stand der Technik ist ein hoher Korrosionsschutz auch an den besonders gefährdeten Stellen gegeben.

In den bevorzugten erfindungsgemäßen Aufzeichnungsschichten wirkt die radiale Variation der Chromkonzentration, die von innen nach außen zunimmt, der beim Sputtern von homogenen Legierungstargets üblicherweise eintretenden nachteiligen radialen Variation von Koerzitivkraft und Magnetisierung sowie ihren jeweiligen Temperaturabhängigkeiten entgegen.

Aus den gleichen Gründen sind im Vergleich zum Stand der Technik in den Targets geringere Anteile der weichmagnetischen TM-Phase notwendig, weshalb die Targets im Magnetron-Mode mit hoher Depositionsrate und Materialausnutzung versputtert werden können.

Beispiele 1 bis 8

In den Beispielen 1 bis 4 sind magnetooptische Aufzeichnungsschichten mit radial homogenem Aufbau angeführt. Diese Beispiele belegen für verschieden zusammengesetzte magnetooptische Aufzeichnungsschichten den Einfluß von Chrom auf die magnetooptischen Eigenschaften und die Langzeitstabilität. Beispiel 3 zeigt ebenfalls anhand einer magnetooptischen Aufzeichnungsschicht mit radial homogenem Aufbau, wie prinzipiell der Einfluß von Chrom auf die magnetooptischen Eigenschaften durch Zugabe beispielsweise von Kobalt kompensiert werden kann.

In den Beispielen 5 und 6 sind magnetooptische Aufzeichnungsschichten nach Stand der Technik mit radial homogenem Aufbau (Beispiel 5) und erfindungsgemäße magnetooptische Aufzeichnungsschichten mit radial inhomogenem Aufbau (Beispiel 6) in Hinblick auf die zum Schreiben erforderliche optimale Schreibleistung einander gegenübergestellt. In den Beispielen 7 und 8 erfolgt ein entsprechender Vergleich in Hinblick auf die Carrier-Werte (Beispiel 7) und die Kompensationstemperatur $T_{comp}$ (Beispiel 8).

Beispiel 1

In einer Gleichspannungs-Kathodenzerstäubungsanlage wurde ein Target aus $Gd_6Tb_{14}Fe_{75}Co_5$ - (Durchmesser 200 mm) eingesetzt. Auf diesem Target wurden Metallscheiben aus Cr (Durchmesser 6 mm, Dicke 2 mm) gleichmäßig verteilt. Zur Einstellung von jeweils unterschiedlichen, aber radial homogenen Chromkonzentrationen wurde in insgesamt vier Versuchen die Anzahl der Chromscheiben zwischen 0 und 0,15 Scheiben pro $cm^2$ variiert. In diesen vier Versuchen wurde jeweils eine Glasplatte (Durchmesser 130 mm) parallel zum Target in einem Abstand von 65 mm angeordnet. Die Vakuumkammer der Kathodenzerstäubungsanlage wurde auf ein Vakuum von 1 x $10^{-7}$ mbar evakuiert. Danach wurde Ar-Gas bis zu einem Druck von 5 x $10^{-3}$ mbar eingelassen. Durch Anlegen einer Gleichspannung bei einer Zerstäubungsleistung von 500 W wurde eine Dünnschicht mit einer Dicke von 100 nm abgeschieden.

Die Zusammensetzung der Schichten wurde jeweils mittels ICP-Spektroskopie (ICP: induced coupled plasma) chemisch analysiert. Der Kerr-Drehwinkel wurde mit einem He-Ne-Laser der Wellenlänge 633 nm von der Luftseite her in Abhängigkeit von einem durchstimmbaren äußeren Magnetfeld gemessen. Es wurde gefunden, daß die abgeschiedenen Schichten eine Achse der leichten Magnetisierung in einer zur Dünnschichtoberfläche senkrechten Richtung besitzen. Zur Untersuchung der Korrosionsstabilität wurden die Schichten in einem Klimaschrank bei konstanter Temperatur und Feuchtigkeit (80°C, 80 % relative Feuchtigkeit) gelagert. Die Messung des Kerr-Drehwinkels wurde in bestimmten Zeitabständen wiederholt. Es zeigte sich, daß der remanente Kerr-Drehwinkel mit zunehmender Auslagerzeit abfällt. Die Abnahme hängt von der chemischen Zusammensetzung der Speicherschicht ab und läßt sich durch die Größe $t_{0,5}$ charakterisieren. $t_{0,5}$ kennzeichnet die Zeit, nach welcher ein Abfall des Kerr-Drehwinkels auf 50 % stattgefunden hat.

Tab. 1 faßt für die Schichten des Beispiels 1 die chemische Zusammensetzung, den Sättigungs-Kerr-Drehwinkel Theta vor der Auslagerung und die $t_{0,5}$-Werte zusammen.

Tabelle 1

| Chemische Zusammensetzung | Theta (Grad) | $t_{0,5}$ (h) |
|---|---|---|
| $Gd_6Tb_{14}Fe_{75}Co_5$ | 0,24 | 6 |
| $(Gd_6Tb_{14}Fe_{75}Co_5)_{98}Cr_2$ | 0,23 | 18 |
| $(Gd_6Tb_{14}Fe_{75}Co_5)_{93}Cr_7$ | 0,19 | 330 |
| $(Gd_6Tb_{14}Fe_{75}Co_5)_{88}Cr_{12}$ | 0,14 | 6000 |

Beispiel 2

In einer Gleichspannungs-Kathodenzerstäubungsanlage wurde ein Target aus $Tb_{22}Fe_{78}$ (Durchmesser 150 mm) eingesetzt. Auf diesem Target wurden zunächst Metallscheiben (Durchmesser 6 mm, Dicke 2 mm) aus Tb (0,4 Scheiben pro $cm^2$) und Co (0,2 Scheiben pro $cm^2$) gleichmäßig verteilt. Zur Einstellung von jeweils unterschiedlichen, aber radial homogenen Chromkonzentrationen wurde in insgesamt vier Versuchen die Anzahl der Chromscheiben zwischen 0 und 0,20 Scheiben pro $cm^2$ variiert. In diesen vier Versuchen wurde jeweils eine Glasplatte (Durchmesser 130 mm) parallel zum Target in einem Abstand von 60 mm angeordnet. Die Vakuumkammer der Kathodenzerstäubungsanlage wurde auf ein Vakuum von 1 x $10^{-7}$ mbar evakuiert. Danach wurde Ar-Gas bis zu einem Druck von 6 x $10^{-3}$ mbar eingelassen. Durch

Anlegen einer Gleichspannung bei einer Zerstäubungsleistung von 500 W wurde jeweils eine Dünnschicht mit einer Dicke von 100 nm abgeschieden.

Die chemische Analyse der Schichten, wie auch die Bestimmung der KerrDrehwinkel und die Untersuchung der Korrosionsstabilität erfolgte wie in Beispiel 1 beschrieben. Es wurde auch für Beispiel 2 gefunden, daß die abgeschiedenen Schichten eine Achse der leichten Magnetisierung in einer zur Dünnschichtoberfläche senkrechten Richtung haben.

Tabelle 2 faßt für die Schichten des Beispiels 2 die chemische Zusammensetzung, den Sättigungs-Kerr-Drehwinkel Theta vor der Auslagerung und die $t_{0,5}$-Werte zusammen.

Tabelle 2

| Chem. Zusammensetzung | Theta (Grad) | $t_{0,5}$ (h) |
|---|---|---|
| $Tb_{25}Fe_{67}Co_8$ | 0,20 | 7 |
| $(Tb_{25}Fe_{67}Co_8)_{95}Cr_5$ | 0,17 | 100 |
| $(Tb_{25}Fe_{67}Co_8)_{91}Cr_9$ | 0,14 | 1050 |
| $(Tb_{25}Fe_{67}Co_8)_{84}Cr_{16}$ | 0,055 | > 10000 |

Aus den Tabellen 1 und 2 ergibt sich, daß für (Gd-Tb-Fe-Co-Cr)-Schichten und für (Tb-Fe-Co-Cr)-Schichten der $t_{0,5}$-Wert und damit die Korrosionsstabilität mit steigendem Cr-Gehalt zunimmt. Damit einhergehend nimmt jedoch der Kerr-Drehwinkel und somit das magnetooptische Signal stark ab. Der Vergleich mit Beispiel 1 zeigt insbesondere, daß die Korrosionsstabilisierung durch Cr und die Abnahme des Kerr-Drehwinkels unabhängig von der speziellen Wahl der Grundlegierung oder des Targets sind.

Beispiel 3

In einer Gleichspannungs-Kathodenzerstäubungsanlage wurde ein Target aus $Tb_{22}Fe_{78}$ (Durchmesser 150 mm) eingesetzt. Auf dieses Target wurden zunächst Metallscheiben aus Tb (Durchmesser 6 mm, Dicke 2 mm, 0,4 Scheiben pro $cm^2$) und danach in unterschiedlicher Anzahl Metallscheiben aus Co und Cr (Durchmesser 6 bzw. 10 mm, Dicke 2 mm) gleichmäßig verteilt. Zur Einstellung der unterschiedlichen, aber radial homogenen Chrom- bzw. Kobaltkonzentrationen wurde in insgesamt vier Versuchen die Anzahl der Kobaltscheiben pro $cm^2$ zwischen 0,2 und 0,5 und die der Chromscheiben pro $cm^2$ zwischen 0 und 0,12 variiert. In diesen vier Versuchen wurde jeweils eine Glasplatte (Durchmesser 130 mm) parallel zum Target in einem Abstand von 60 mm angeordnet. Die Vakuumkammer der Kathodenzerstäubungsanlage wurde auf ein Vakuum von $1 \times 10^{-7}$ mbar evakuiert. Danach wurde Ar-Gas bis zu einem Druck von $6 \times 10^{-3}$ mbar eingelassen. Durch Anlegen einer Gleichspannung bei einer Zerstäubungsleistung von 500 W wurde jeweils eine Dünnschicht mit einer Dicke von 100 nm abgeschieden.

In Tabelle 3 sind für die Schichten des Beispiels 3 die chemische Zusammensetzung und der Sättigungs-Kerr-Drehwinkel Theta angegeben. Diese wurden wie in Beispiel 1 beschrieben bestimmt.

Tabelle 3

| Chem. Zusammensetzung | Theta (Grad) |
|---|---|
| $(Tb_{20}Fe_{80})_{92}Co_8$ | 0,21 |
| $(Tb_{20}Fe_{80})_{82}Co_8Cr_{10}$ | 0,11 |
| $(Tb_{20}Fe_{80})_{78}Co_{12}Cr_{10}$ | 0,15 |
| $(Tb_{20}Fe_{80})_{70}Co_{20}Cr_{10}$ | 0,19 |

Wie aus Tabelle 3 ersichtlich, kann die durch das Zulegieren von Cr bedingte Abnahme des Kerr-Drehwinkels durch gleichzeitiges Anheben des Co-Gehaltes der Legierung kompensiert werden. Für das Verhältnis zwischen dem Cr-Gehalt y und der Zunahme des Co-Gehaltes dx sollte dabei gelten

EP 0 446 784 A2

0,6 < dx/y < 1,4,

um eine möglichst vollständige Kompensation der Effekte von Cr auf die magnetooptischen Eigenschaften zu erreichen. Korrosionsexperimente an den in Tabelle 3 angeführten Proben ergaben außerdem, daß die Korrosionsstabilität mit steigendem Co-Gehalt zunimmt. Die Erhöhung des Co-Gehaltes wirkt sich somit positiv auf das Korrosionsverhalten der (RE-TM)-Schicht aus (vgl. hierzu Gimenez et al. in IEEE Transactions on Magnetics, Vol 24, No. 2, 1988, Seiten 1738 bis 1740).

Beispiel 4

In einer Gleichspannungs-Kathodenzerstäubungsanlage wurde ein Target aus Al (Durchmesser 200 mm) sowie ein Target aus $Tb_{22}Fe_{78}$ (Durchmesser 150 mm) eingesetzt. Auf dem (Tb-Fe)-Target wurden wie in Bespiel 2 beschrieben Metallscheiben aus Tb und Co und in jeweils unterschiedlicher Anzahl Metallscheiben aus Cr gleichmäßig verteilt. In mehreren Versuchen wurde jeweils eine Glasplatte (Durchmesser 130 mm) parallel zu den Targets in einem Abstand von 60 mm angeordnet. Die Vakuumkammer der Kathodenzerstäubungsanlage wurde auf ein Vakuum von $1 \times 10^{-7}$ mbar evakuiert. Danach wurde ein $N_2$/Ar-Gemisch (1:4) bis zu einem Druck von $1 \times 10^{-3}$ mbar eingelassen. Durch Anlegen einer Gleichspannung über dem Al-Target wurde bei einer Zerstäubungsleistung von 500 W eine AlN-Schicht von 5 nm Dicke abgeschieden. Danach wurde Ar-Gas bis zu einem Druck von $5 \times 10^{-3}$ mbar eingelassen. Durch Anlegen einer Gleichspannung bei einer Zerstäubungsleistung von 500 W wurde eine (Tb-Fe-Co-Cr)-Schicht mit einer Dicke von 100 nm abgeschieden. Danach wurde nochmals unter den gleichen Bedingungen wie oben eine AlN-Schicht mit einer Dicke von 5 nm abgeschieden. Zur Untersuchung der Korrosionsstabilität wurden die Schichten in einem Klimaschrank bei konstanter Temperatur und Feuchtigkeit (80 °C, 80 % rel.F.) gelagert. Nach einer Auslagerzeit von 850 h zeigten die Platten mit einem geringen Cr-Gehalt Korrosionserscheinungen insbesondere am äußeren Rand der AlN-Beschichtung. Platten mit einem hohen Cr-Gehalt (größer als 10 At.-%) zeigten dagegen am Außenrand der Platten keine Korrosionseffekte.

Beispiel 5

In einer Gleichspannungs-Kathodenzerstäubungsanlage wurde ein Target aus Al (Durchmesser 200 mm) sowie ein $Tb_{22}Fe_{78}$-Target (Durchmesser 150 mm) eingesetzt. Auf dem Tb-Fe-Target wurden zunächst Metallscheiben aus Tb (Durchmesser 6 mm, Dicke 2 mm, 0,4 Scheiben pro $cm^2$) gleichmäßig verteilt. Zur Einstellung von jeweils unterschiedlichen, aber radial homogenen Kobalt- und Chromkonzentrationen wurden Metallscheiben aus Kobalt (Durchmesser 6 mm, Dicke 2 mm, 0,2 bis 0,6 Scheiben pro $cm^2$) und Chrom (Durchmesser 10 mm, Dicke 2 mm, 0 bis 0,25 Scheiben pro $cm^2$) gleichmäßig verteilt. In mehreren Versuchen wurde jeweils eine transparente Platte aus Polycarbonat mit eingeprägten Spurrillen (Durchmesser 130 mm) parallel zu den Targets in einem Abstand von 60 mm angeordnet. Die Vakuumkammer der Kathodenzerstäubungsanlage wurde auf ein Vakuum von $1 \times 10^{-7}$ mbar evakuiert. Danach wurde ein $N_2$/Ar-Gemisch (1:4) bis zu einem Druck von $1 \times 10^{-3}$ mbar eingelassen. Die Polycarbonat-Platten wurden wie folgt beschichtet: Durch Anlegen einer Gleichspannung über dem Al-Target wurde bei einer Zerstäubungsleistung von 500 W eine AlN-Schicht von 80 nm Dicke abgeschieden. Danach wurde Ar-Gas bis zu einem Druck von $6 \times 10^{-3}$ mbar eingelassen. Durch Anlegen einer Gleichspannung bei einer Zerstäubungsleistung von 500 W wurde eine (Tb-Fe-Co-Cr)-Schicht mit einer Dicke von 80 nm abgeschieden. Danach wurde nochmals unter den gleichen Bedingungen wie oben eine AlN-Schicht mit einer Dicke von 80 nm abgeschieden.

Beispiel 6

Die Erzeugung der Schichten erfolgte wie in Beispiel 5, nur daß die Metallscheiben aus Co und Tb gleichmäßig auf der Oberfläche des $Tb_{28}Fe_{72}$-Targets (Durchmesser 200 mm) verteilt waren, während die Chromscheiben radial, mit von innen nach außen zunehmender Zahl pro $cm^2$, auf der Targetoberfläche angeordnet waren.

Mit einem magnetooptischen Laufwerk wurden an den Platten der Beispiele 5 und 6 Untersuchungen zur optimalen Schreibleistung durchgeführt. Hierzu wurde die Platte mit einer konstanten Winkelgeschwindigkeit von 1800 UpM gedreht. Mit einem fokussierten Infrarotlaser (Wellenlänge 830 nm) wurde von der Substratseite her bei einem äußeren Magnetfeld von 300 Oe ein periodisches Rechtecksignal mit einer Frequenz von 3,7 MHz auf unterschiedliche Radien der Platte geschrieben. Beim Lesen wurde ein

13

kontinuierlicher linear polarisierter Laserstrahl mit einer Leistung von 1 mW auf die vorher beschriebenen Spuren fokussiert und das reflektierte Licht mit einer polarisationsempfindlichen Optik detektiert. Das detektierte Signal wurde frequenzanalysiert, wobei der Carrier auf der einfachen und der doppelten Aufzeichnungsfrequenz mit einer Bandbreite von 30 kHz in Abhängigkeit von der Schreibleistung und vom Radius gemessen wurde. Es wurde gefunden, daß bei festem Radius der Carrier auf der einfachen Aufzeichnungsfrequenz ab einer bestimmten Schreibenergie stark ansteigt und anschließend ein Maximum durchläuft. Der Carrier auf der doppelten Aufzeichnungsfrequenz besitzt gleichzeitig ein Minimum. Als optimale Schreibleistung wird diejenige Laserleistung bezeichnet, bei welcher der Carrier der doppelten Aufzeichnungsfrequenz ein Minimum besitzt.

In Tabelle 4 ist für die Schichten des Beispiels 5 die bei radial konstantem Cr-Gehalt y ermittelte optimale Schreibleistung auf verschiedenen Radien für verschiedene Co-Gehalte x angegeben. Die Meßdaten in den Tabellen 4 und 5 gelten für Chromgehalte y zwischen 0 und 15 At.-%.

Tabelle 4

| x-y | R | | |
|-----|-------|-------|-------|
| (At.-%) | 30 mm | 45 mm | 60 mm |
| 4.4 | 3.5 | 5.4 | 7.0 |
| 9.0 | 5.3 | 6.7 | 9.5 |
| 12.1 | 6.0 | 8.4 | >10 |

Tabelle 4 zeigt, daß bei festem Cr-Gehalt die optimale Schreibleistung mit zunehmendem Co-Gehalt wächst. Sie hängt für radial konstante Cr- und Co-Gehalte jedoch in unerwünschter Weise stark vom Radius ab.

Es wurde gefunden, daß abhängig von der Differenz zwischen Co-Gehalt x und Cr-Gehalt y ein solcher Cr-Gradient eingestellt werden kann, daß die Platte auf allen Radien mit der gleichen Laserleistung beschreibbar ist. Tab. 5 zeigt in Abhängigkeit von der Differenz x-y den einzustellenden Cr-Gradienten und die dabei erzielte optimale Schreibleistung.

Tabelle 5

| x-y | Cr-Gehalt (At.-%) | | | Optimale Schreibleistung |
|-----|-------|-------|-------|-----|
| (At.-%) | 30 mm | 45 mm | 60 mm | (mW) |
| 4 | y-6 | y | y+4 | 5 |
| 9 | y-6 | y | y+7 | 6.5 |
| 12 | y-10 | y | y+7 | 8.5 |

Zur weiteren Verdeutlichung der Erfindung seien im folgenden zwei erfindungsgemäße mit den entsprechenden nicht erfindungsgemäßen Datenplatten verglichen.

Im ersten Fall wies eine nicht erfindungsgemäße Datenplatte, die entsprechend Beispiel 5 hergestellt wurde, über ihre gesamte Fläche hinweg die einheitliche Zusammensetzung $Tb_{20}Fe_{51}Co_{19}Cr_{10}$ auf. Für die optimale Schreibleistung ergab sich bei einem Radius von 30 mm ein Wert von 5,3 mW, bei 45 mm von 6,7 mW und bei 60 mm von 9,5 mW. Bei der entsprechenden erfindungsgemäßen Datenplatte, die nach Beispiel 6 hergestellt wurde, änderte sich die Zusammensetzung angenähert linear von $Tb_{22}Fe_{55}Co_{19}Cr_4$ bei einem Radius von 30 mm bis $Tb_{18}Fe_{46}Co_{19}Cr_{17}$ bei einem Radius von 60 mm. Für die erfindungsgemäße Datenplatte wurde ein radiusunabhängiger Wert von 6,5 mW für die optimale Schreibleistung gefunden.

Im zweiten Fall wies eine nicht erfindungsgemäße Datenplatte, die entsprechend Beispiel 5 hergestellt wurde, über ihre gesamte Fläche hinweg die einheitliche Zusammensetzung $Tb_{18}Fe_{46}Co_{24}Cr_{12}$ auf. Für die optimale Schreibleistung ergab sich hierbei bei einem Radius von 30 mm ein Wert von 6,0 mW, bei 45 mm von 8,4 mW und bei 60 mm von größer als 10 mW. Bei der entsprechenden erfindungsgemäßen Datenplatte, die nach Beispiel 6 hergestellt wurde, änderte sich die Zusammensetzung angenähert linear von $Tb_{21}Fe_{53}Co_{24}Cr_2$ bei einem Radius von 30 mm bis $Tb_{16}Fe_{41}Co_{24}Cr_{19}$ bei einem Radius von 60 mm. Für die erfindungsgemäße Datenplatte wurde ein radiusunabhängiger Wert von 8,5 mW für die optimale Schreibleistung gefunden.

Beispiel 7

Magnetooptische Datenplatten wurden wie in Beispiel 5 und 6 beschrieben hergestellt.

Mit einem magnetooptischen Laufwerk wurden an diesen Platten Untersuchungen zur Abhängigkeit des Aufzeichnungsverhaltens von der im Laserpuls zugeführten Wärmemenge durchgeführt. Hierzu wurde die Platte mit variablen Winkelgeschwindigkeiten gedreht. Mit einem fokussierten Infrarotlaser (Wellenlänge 830 nm) wurde bei einer Laserleistung von 10 mW und einem äußeren Magnetfeld von 300 Oe ein periodisches Rechtecksignal von der Substratseite her geschrieben. Die Wärmemenge pro Flächeneinheit wurde durch gleichzeitige Variation der Aufzeichnungsfrequenz (0,9 - 3,6 MHz) und der Winkelgeschwindigkeit der Platte (600 - 2400 UpM) variiert, wobei das Verhältnis aus Aufzeichnungsfrequenz und Lineargeschwindigkeit konstant gehalten wurde. Eine Wärmemenge von 0,5 nJ pro Puls wurde dabei mit einer Frequenz von 3,6 MHz und einer Winkelgeschwindigkeit von 2400 UpM realisiert. Die Wärmemenge 2 nJ pro Puls wurde mit einer Frequenz von 0,9 MHz und einer Winkelgeschwindigkeit von 600 UpM realisiert. Beim Lesen wurde ein kontinuierlicher linear polarisierter Laserstrahl mit einer Leistung von 1 mW auf die vorher beschriebenen Spuren fokussiert und das reflektierte Licht mit einer polarisationsempfindlichen Optik detektiert. Das detektierte Signal wurde frequenzanalysiert, wobei der Carrier auf der einfachen Aufzeichnungsfrequenz mit einer Bandbreite von 30 kHz gemessen wurde.

Tabelle 6 zeigt für Datenplatten mit jeweils unterschiedlichem, homogen verteiltem Cr-Gehalt in der Aufzeichnungsschicht die Carrier-Werte (in dBm) auf der einfachen Aufzeichnungsfrequenz in Abhängigkeit von der deponierten Wärmemenge.

### Tabelle 6

| Zusammensetzung | Wärmemenge (nJ) | | |
| --- | --- | --- | --- |
| | 0,5 | 1,0 | 2,0 |
| $Tb_{18}Fe_{46}Co_{19}Cr_{17}$ | -22 | -26 | -43 |
| $Tb_{18}Fe_{47}Co_{20}Cr_{15}$ | -14 | -12 | -32 |
| $Tb_{19}Fe_{50}Co_{21}Cr_{10}$ | -20 | - 5 | - 8 |
| $Tb_{20}Fe_{53}Co_{22}Cr_{5}$ | -50 | - 9 | - 4 |

Aus Tabelle 6 ergibt sich, daß bei Aufzeichnungsschichten mit homogen verteiltem Chromgehalt der Carrier eine starke Abhängigkeit von der deponierten Wärmemenge pro Flächeneinheit aufweist. Hohe Wärmemengen führen bei hohen Cr-Gehalten zu einer Abnahme des Carriers aufgrund ungünstig vergrößerter Domänen. Dagegen sind Medien mit geringem Cr-Gehalt bei niedrigen Wärmemengen nicht beschreibbar und erleiden einen starken Carrier-Verlust.

Tabelle 7 zeigt die Abhängigkeit der Carrier-Werte von der deponierten Wärmemenge pro Flächeneinheit für eine Datenplatte, welche mit zunehmendem Radius einen ansteigenden Cr-Gehalt besitzt. Die Aufzeichnung wurde so durchgeführt, daß bei konstanter Winkelgeschwindigkeit und konstanter Laserleistung auf dem Radius 60 mm eine Wärmemenge von 1,0 nJ pro Flächeneinheit und auf dem Radius 30 mm eine Wärmemenge von 2,0 nJ pro Flächeneinheit deponiert wurde. Die Zusammensetzung der Aufzeichnungsschicht variierte hierbei von $Tb_{20}Fe_{53}Co_{23}Cr_4$ (Radius 30 mm) bis $Tb_{20}Fe_{49}Co_{21}Cr_{10}$ - (Radius 60 mm).

Tabelle 7

| Wärmemenge (nJ) | Radius (mm) | Cr-Gehalt (At-%) | Carrier (dBm) |
|---|---|---|---|
| 1,0 | 60 | 10 | -5 |
| 2,0 | 30 | 4 | -4 |

Wie aus Tabelle 7 ersichtlich, ergibt sich für eine Datenplatte mit radialen Cr-Gradienten eine wesentlich schwächere Abhängigkeit des Carriers von der pro Flächeneinheit deponierten Wärmemenge als für eine Datenplatte mit homogen verteiltem Cr-Gehalt (vgl. Tabelle 6). Ein scheibenförmiger Aufzeichnungsträger mit radial nach außen ansteigendem Cr-Gehalt zeigt somit wesentlich geringere Schwankungen des Carriers längs eines Radius und ist unempfindlicher gegenüber Schwankungen der Schreibleistung.

Beispiel 8

In einer Gleichspannungs-Kathodenzerstäubungsanlage wurde ein Target (Durchmesser 200 mm), bestehend aus einer homogenen, amorphen Legierung aus Gd, Tb, Fe und Co eingesetzt. Auf das Target wurden in unterschiedlicher Anzahl pro cm$^2$, die vom inneren zum äußeren Rand zunahm, Metallscheiben aus Cr (Durchmesser 10 mm, Dicke 2 mm) aufgelegt. Eine Glasplatte (Durchmesser 130 mm) wurde parallel zum Target in einem Abstand von 45 mm angeordnet. Die Vakuumkammer der Kathodenzerstäubungsanlage wurde auf ein Vakuum von $1 \times 10^{-7}$ mbar evakuiert. Danach wurde Ar-Gas bis zu einem Druck von $5 \times 10^{-3}$ mbar eingelassen. Durch Anlegen einer Gleichspannung bei einer Zerstäubungsleistung von 500 W wurde eine Dünnschicht mit einer Dicke von 100 nm abgeschieden.

Die chemische Zusammensetzung und die magnetischen Eigenschaften der Schicht wurden in Abhängigkeit vom Radius untersucht. Tab. 8 zeigt die chemische Zusammensetzung und die Variation der Kompensationstemperatur ($T_o = 323K$) längs des Scheibenradius für eine Datenplatte nach dem Stand der Technik (a) und eine erfindungsgemäße Datenplatte (b) mit radialem Chromgradienten, wobei die Chromkonzentration vom inneren zum äußeren Rand hin ansteigt.

Der für die Datenplatten (a) und (b) gefundene radiale RE-Gradient ist auf Entmischungsvorgänge beim Sputtern des homogenen Legierungstargets zurückzuführen.

Tabelle 8

| R (mm) | (a) Stand der Technik | | | (b) Erfindung | | |
|---|---|---|---|---|---|---|
| | RE-Gehalt (At.-%) | Cr-Gehalt (At.-%) | $T_{comp}$ | RE-Gehalt (At.-%) | Cr-Gehalt (At.-%) | $T_{comp}$ |
| 30 | 20,5 | 7 | $T_0+40$ K | 20,5 | 4 | $T_0+5$ K |
| 45 | 19,5 | 7 | $T_0$ | 19,5 | 7 | $T_0$ |
| 60 | 18,5 | 7 | $T_0-40$ K | 18,5 | 10 | $T_0-10$ K |

Für die Datenplatte mit chemisch homogener Aufzeichnungsschicht ergab sich eine starke Abhängigkeit der Kompensationstemperatur und damit der Differenz $T_C-T_{comp}$ vom Radius, während bei der erfindungsgemäßen Datenplatte die Radiusabhängigkeit von $T_{comp}$ stark reduziert war, so daß ein Medium mit deutlich geringerem Schreibrauschen resultierte.

Zur Herstellung der erfindungsgemäßen magnetooptischen Datenplatten können somit auch homogene Legierungstargets ohne nachteiligen Einfluß auf die radiale Gleichmäßigkeit der Kompensationstemperatur verwendet werden.

**Patentansprüche**

1. Magnetooptische Datenplatte mit mindestens einem optisch transparenten dimensionsstabilen Substrat und mindestens einer magnetooptischen Aufzeichnungsschicht aus einer chromhaltigen Lanthanid-

EP 0 446 784 A2

übergangsmetall-Legierung, dadurch gekennzeichnet, daß sich die Chromkonzentration in der magnetooptischen Aufzeichnungsschicht in radialer Richtung ändert.

2. Magnetooptische Datenplatte nach Anspruch 1, dadurch gekennzeichnet, daß sich die Chromkonzentration über den Radius der magnetooptischen Aufzeichnungsschicht hinweg nach einer stetigen mathematischen Funktion ändert.

3. Magnetooptische Datenplatte nach Anspruch 1 oder 2, dadurch gekennzeichnet, daß die Chromkonzentration in der magnetooptischen Aufzeichnungsschicht von deren inneren Rand aus bis zu deren äußeren Rand hin zunimmt.

4. Magnetooptische Datenplatte nach einem der Ansprüche 1 bis 3, dadurch gekennzeichnet, daß die Aufzeichnungsschicht die mittlere Zusammensetzung

$$R_z Fe_{100-x-y-z}Co_x Cr_y$$

hat, wobei $10<z<40, 0<x<40$ und $0,01<y<20$ ist und R mindestens ein Element aus der Reihe der Seltenen Erden La, Ce, Pr, Ho, Nd, Sm, Eu, Gd, Tb oder Dy ist.

5. Magnetooptische Datenplatte nach Anspruch 4, dadurch gekennzeichnet, daß $R = Tb$ und $15<z<25, 4<x<25$ und $5<y<15$ ist.

6. Magnetooptische Datenplatte nach einem der Ansprüche 1 bis 5, dadurch gekennzeichnet, daß die Kompensationstemperatur $T_{comp}$ der ferrimagnetischen magnetooptischen Aufzeichnungsschicht, bei welcher die Gesamtmagnetisierung $M_s$ der magnetooptischen Aufzeichnungsschicht nach außen hin gleich 0 wird, über die gesamte Radiuslänge der magnetooptischen Aufzeichnungsschicht hinweg konstant ist.

7. Magnetooptische Datenplatte nach einem der Ansprüche 1 bis 6, dadurch gekennzeichnet, daß mindestens eine dielektrische Schicht aus einem Metallcarbid, Metallnitrid, Metalloxid oder deren Mischungen auf der Unter- und/oder Oberseite der magnetooptischen Aufzeichnungsschicht aufgebracht ist.

8. Magnetooptische Datenplatte nach einem der Ansprüche 1 bis 7, dadurch gekennzeichnet, daß auf der dem Substrat abgewandten Seite der magnetooptischen Aufzeichnungsschicht, direkt oder auf einer hierauf angeordneten dielektrischen Schicht, eine metallische Schicht aufgebracht ist.

9. Verfahren zur Herstellung einer magnetooptischen Datenplatte mit mindestens einem optisch transparenten dimensionsstabilen Substrat und mindestens einer magnetooptischen Aufzeichnungsschicht durch
(1) Kathodenzerstäubung oder Magnetronkathodenzerstäubung ("sputtering") einer Materialquelle ("sputtering target") einer Lanthanid-übergangsmetall-Legierung, auf deren Oberfläche chromreiche Körper geeigneter äußerer Form angeordnet sind, im Vakuum in einer Prozeßgasatmosphäre und
(2) Abscheiden der chromhaltigen Lanthanid-übergangsmetall-Legierung aus der Gasphase auf der Oberfläche des dimensionsstabilen Substrats oder einer hierauf bereits befindlichen Schicht, dadurch gekennzeichnet, daß die chromreichen Körper auf der Oberfläche ungleichmäßig verteilt angeordnet sind.

10. Verfahren zur Herstellung einer magnetooptischen Datenplatte mit mindestens einem optisch transparenten dimensionsstabilen Substrat und mindestens einer magnetooptischen Aufzeichnungsschicht durch
(1) Kathodenzerstäubung oder Magnetronkathodenzerstäubung ("sputtering") einer chromhaltigen Lanthanid-übergangsmetall-Legierung geeigneter äußerer Form als Materialquelle ("sputtering target") im Vakuum in einer Prozeßgasatmosphäre und
(2) Abscheiden der chromhaltigen Lanthanid-übergangsmetall-Legierung aus der Gasphase auf der Oberfläche des dimensionsstabilen Substrats oder einer hierauf bereits befindlichen Schicht, dadurch gekennzeichnet, daß man hierbei eine scheiben- oder ringförmige Materialquelle inhomogener Zusammensetzung verwendet, in der sich die Chromkonzentration in radialer Richtung ändert.

17

11. Verfahren nach Anspruch 10, dadurch gekennzeichnet, daß sich die Chromkonzentration über den Radius der scheiben- oder ringförmigen Materialquelle hinweg mathematisch stetig ändert.

12. Verfahren nach einem der Ansprüche 9 bis 11, dadurch gekennzeichnet, daß die Chromkonzentration vom Mittelpunkt der scheiben- oder ringförmigen Materialquelle aus zu deren Rand hin zunimmt.